# EUROPEAN PATENT SPECIFICATION

(11) **EP 2 784 326 B1**
(45) Date of publication and mention of the grant of the patent: **06.05.2020**
(21) Application number: 13305359.5
(22) Date of filing: 25.03.2013
(51) Int. Cl.: F04D 29/051, F01D 25/16, F04D 29/058, F16C 32/04, F04D 29/28

(54) **Compact turbomachine with magnetic bearings and auxiliary bearings**
Kompakte Turbomaschine mit Magnetlagern und Hilfslagern
Turbomachine compact à paliers magnétiques et paliers auxiliaires

(43) Date of publication of application: 01.10.2014
(73) Proprietor: SKF MAGNETIC MECHATRONICS, 27950 Saint-Marcel (FR)
(72) Inventor: Helene, Eric, 76350 Oissel (FR); Carrasco, Eduardo, 27600 Gaillon (FR)
(74) Representative: Cabinet Beau de Loménie

(56) References cited:
- EP-A1- 0 470 637
- EP-A1- 1 083 349
- DE-A1- 10 032 984
- US-A1- 2009 015 012

## Description

### BACKGROUND OF THE INVENTION

### 1. Field of the Invention

The present invention relates to a compact turbo-machine with magnetic bearings and auxiliary bearings as well as an axial magnetic bearing for a compact turbo-machine.

### 2. Description of the Related Art

Document WO 91/17361 A1 discloses a compressor wherein the axial journaling is carried out by means of a magnet bearing assembly, adapted to receive its control from an element measuring the axial position of the rotating compressor components.

The compressor disclosed in document WO 91/17361 A1 is illustrated in Fig. 5. The compressor comprises a body 1, a compressor unit 2 and an electric motor 3. A rotor wheel 4 included in the compressor unit 2, a rotor 5 included in the electric motor 3 and a radial plate 7 included in a magnet bearing assembly 6, are all mounted on a main shaft 8 to be rotated concentrically around the center axis of the main shaft 8 upon a bearing assembly included in the body 1. The bearing assembly comprises a radial bearing array 9 with contactless radial bearings 9a, 9b which are mounted on body 1 on either side of electric motor 3 in the longitudinal direction of the main shaft 8. The bearing assembly further comprises an axial magnet bearing assembly 6 cooperating with the radial plate 7. The compressor unit 2 includes a stator section 10 whose intake duct 11 is fitted with a means 12 measuring the position of the rotating compressor components, especially that of rotor wheel 4. The sensing means 12 is electrically connected via lines 13 with a control circuit 14 for controlling the operation of the axial magnet bearing assembly 6. Power supply is arranged from control circuit 14 along conductors 15a, 15b to electromagnets 16a, 16b which are located in a chamber 17 surrounding the radial plate 7. On the opposite side relative to intake duct 11 of the rotor wheel 4, the body 1 is provided with a non-contact sealing 19 between the rotating compressor components and the body 1.

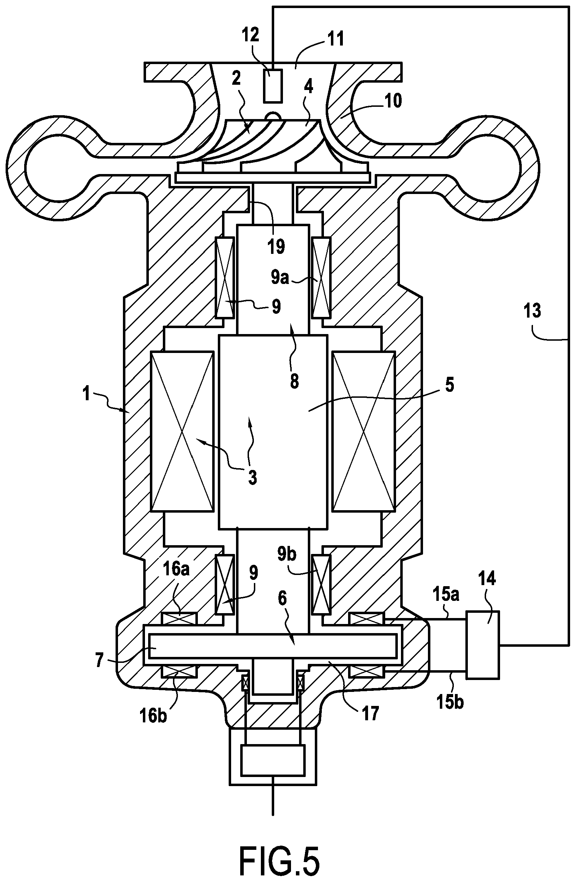

The compressor of Fig. 5 is only an example of a known machine equipped with an axial magnetic bearing 6. The embodiment of Fig. 5 which implies the use of a radial plate 7 mounted on the main shaft 8 furthest away from the rotor wheel 4 increases the length of the machine and implies a specific mounting assembly. Moreover the radial plate 7 may induce further losses due to fluid friction.

Document US 4948348 A discloses an immersion pump having a support for a shaft and a ferromagnetic impeller wheel mounted to the shaft. A controllable electromagnet operates to axially support and position the impeller wheel. However permanent magnets are used as radial bearings for this vertically arranged shaft and the overall arrangement is generally not satisfactory and is not adapted to a horizontally arranged shaft.

Document US 2004/0022653 A1 discloses a rotary machine comprising a rotary shaft supported by first and radial magnetic bearings that are electrically controlled by a control device. An axial abutment device comprises a rotor formed by a disc secured on the rotary shaft and interposed between two stators formed annularly around the rotary shaft and each including an annular coil controlled electrically by a system for servo-controlling the axial position of the shaft. This document discloses a centrifugal compressor further comprising passive auxiliary bearings such as ball bearings or smooth bearings which serve to receive the rotary shaft in the event of a failure of the magnetic bearings. Such a machine is not compact due to the sequential arrangement of radial magnetic bearings, passive auxiliary bearings and an axial abutment device.

Further relevant documents of prior art are EP 0 470 637 A1 and US 2009/015012 A1.

### SUMMARY OF THE INVENTION

It is therefore an object of the present invention to provide a turbo-machine with magnetic bearings and auxiliary bearings which remedies the above-mentioned problems and in particular that is more compact than the known turbo-machines.

It is a further object of the invention to provide a turbo-machine which has a reduced axial length, which is easier to assemble and which has an increased stiffness.

A further object of the invention is to enable to master all the air gaps of the turbo-machine more precisely.

The invention further relates to an improved axial magnetic bearing for a compact turbo-machine.

According to the invention, it is proposed not only to use the impeller of the turbo-machine as a thrust disc of an axial magnetic bearing, but also to integrate an auxiliary bearing (which is also called "landing bearing", "back up bearing" or "emergency touch down bearing") in the axial magnetic bearing itself.

The invention is defined in the appended claims.

In particular, the invention relates to an axial bearing assembly according to claim 1 and to a turbo-machine according to claim 9, which includes an axial bearing assembly according to claim 1.

According to a first possible embodiment, the first rotor armature being made of iron or of a material which is adapted to be attracted in a magnetic field is constituted by a separate element which is mounted on the at least first impeller to constitute the rear face of the at least first impeller, the at least first impeller being itself made of a material which is not adapted to be attracted in a magnetic field.

According to a second possible embodiment, the first rotor armature being constituted by the rear face of the at least first impeller is an integral part of the first impeller which is itself made of iron or of a material which is adapted to be attracted in a magnetic field.

Advantageously the at least first impeller has a larger diameter than a mean diameter of said rotary shaft.

According to a specific embodiment of the invention, the turbo-machine further comprises an insert made of a non-magnetic material which is interposed between the first stator portion of the at least first axial magnetic bearing and the at least first auxiliary bearing integrated within the first stator portion of the at least first axial magnetic bearing.

The auxiliary bearing may be a ball bearing, a needle roller bearing or a sliding bearing.

The at least first impeller may be configured to provide a radial compression or expansion of the fluid or an axial compression or expansion of the fluid.

According to an embodiment of the present invention, the turbo-machine further comprises a second impeller for compressing or expanding the fluid, said second impeller being mounted at a second end of the rotary shaft, a second axial magnetic bearing, wherein a second auxiliary bearing is integrated within a second stator portion of the second axial magnetic bearing and wherein the second stator portion of the second axial magnetic bearing is located opposite a second rotor armature of the second axial magnetic bearing, the second rotor armature being made of iron or of a material which is adapted to be attracted in a magnetic field and being constituted by a rear face of said second impeller.

The turbo-machine according to the invention may comprise an electric machine which is constituted by an electric motor or an electric generator incorporated within the stator housing.

### BRIEF DESCRIPTION OF THE DRAWINGS

The above and other objects, features and advantages of the invention will become more apparent from the following description of specific embodiments when read in connection with the accompanying drawings.
Fig. 1 is a schematic longitudinal sectional view of an axial magnetic bearing according to a first embodiment of the invention, which directly cooperates with a compressing or expanding impeller and is combined with an auxiliary ball bearing;
Fig. 2 is a schematic longitudinal sectional view of an axial magnetic bearing according to a second embodiment of the invention, which directly cooperates with a compressing or expanding impeller and is combined with an auxiliary needle roller bearing;
Fig. 3 is a schematic longitudinal sectional view of a turbo-machine equipped with an example of auxiliary bearings integrated in axial magnetic bearings, which directly cooperate with compressing or expanding impellers;
Fig. 4A, 4B and 4C are partial views of the embodiment of Fig. 3 which show different air gaps; and
Fig. 5 is a schematic longitudinal sectional view of an example of a known turbo-machine equipped with an axial magnetic bearing.

### DESCRIPTION OF THE PREFERRED EMBODIMENTS

Referring now in detail to the figures of the drawings, wherein like characters designate identical or corresponding parts, the present invention will be described in connection with preferred embodiments, which are given by way of examples.

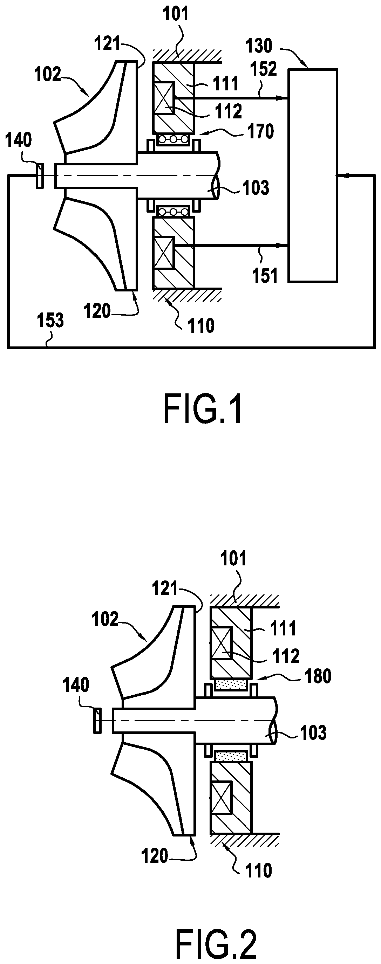

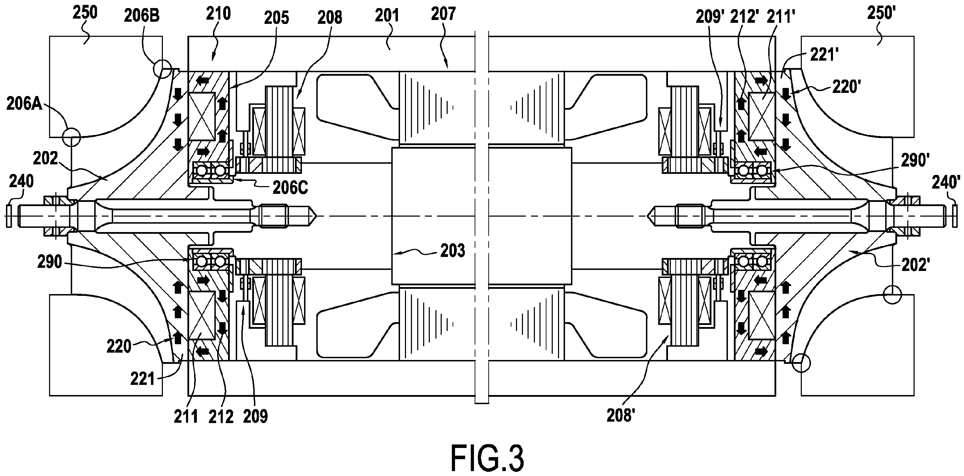

First of all it may be noted that the invention applies to all kinds of turbo-machines for compressing or expanding a fluid, such as compressors, pumps or turbines, which comprise at least one impeller 102 (Figs 1 and 2) or 202 (Fig. 3) which is located within a housing 101 (Figs 1 and 2) or 201 (Fig. 3) and is mounted at an end of a rotary shaft 103 (Figs 1 and 2) or 203 (Fig. 3). The impeller 102 or 202 may be configured to provide a radial compression or expansion of the fluid or may be configured to provide an axial compression or expansion of the fluid.

Referring more specifically to Figs 1 and 2, an axial magnetic bearing 110 is applied to a turbo-machine for compressing or expanding a fluid. The turbo-machine comprises at least one impeller 102 mounted at a first end of a rotary shaft 103 supported in a contactless manner by radial magnetic bearings (not shown in Figs 1 and 2)) and auxiliary bearings 170, 180.

The axial magnetic bearing 110 comprises a rotor armature 120 and a stator portion 111, 112 with coils 112 which are adapted to be controlled via lines 151, 152 by a control circuit 130 (shown only in Fig. 1) receiving via line 153information signals outputted by at least one axial detector 140 configured for sensing the axial position of the rotary shaft 103.

According to a first specific feature of the invention, the auxiliary bearing 170 (Fig. 1) or 180 (Fig. 2) is integrated within the stator portion 111, 112 of axial magnetic bearing 110 which includes a ferromagnetic core 111 and coils 112.

According to another specific feature of the invention, the stator portion 111, 112 of the axial magnetic bearing 110 is located opposite the rotor armature 120 which is made of iron or of a material which is adapted to be attracted in a magnetic field and is constituted by a rear face 121 of the impeller 102.

If the impeller 102 is made of iron or of a material which is adapted to be attracted in a magnetic field, the rotor armature 120 being constituted by the rear face 121 of the impeller 102 is an integral part of the impeller 102.

Alternatively, if the impeller 102 is itself made of a material which is not adapted to be attracted in a magnetic field, the rotor armature 120 which is made of iron or of a material which is adapted to be attracted in a magnetic field is constituted by a separate element which is mounted on the impeller 102 to constitute the rear face 121 of the impeller 102.

The auxiliary bearing may be a ball bearing 170 as shown in Fig.1, a ball bearing 290 with double rows as shown in Fig. 3, a needle roller bearing or a sliding bearing 180 as shown in Fig. 2. The auxiliary bearing may be a radial auxiliary bearing or a radial and axial auxiliary bearing.

The impeller 102 generally has a larger diameter than a mean diameter of the rotary shaft 103 or than the rest of the components of rotary shaft 203. This increases the axial load capacity. An important force may be created for a given magnetic flow.

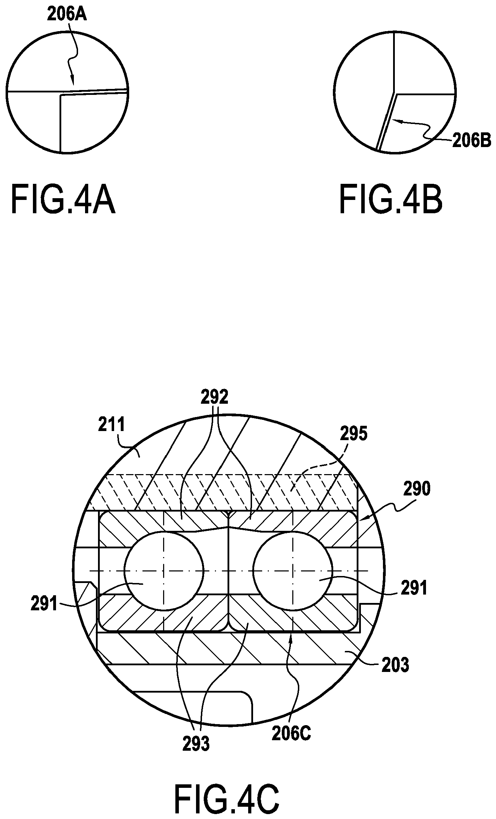

Generally speaking according to the invention, the impeller 102 is used as a thrust disc 120 for an axial magnetic bearing 110 and an axial-radial auxiliary bearing (landing bearing) is integrated in the actuator or stator portion 111, 112 to reduce the axial length of the machine and moreover enable to master all the air-gaps more precisely as will be explained later with respect to Fig. 4A to 4C.

The present invention thus permits to increase axial load capacity, to increase the rotor stiffness and to improve the positioning tolerance of the impeller of a pump, compressor or turbine.

Using the wheel as an axial actuator and placing the auxiliary bearing 4 in the axial magnetic bearing 5 reduces the length of the rotor assembly, making it stiffer than placing each element next to the other.

The fact of having the auxiliary bearing 170, 180 or 290 directly mounted on the stator portion 111, 112 (Fig. 1 and 2) or 211, 212 (Fig.3 and 4C) of the axial magnetic bearing 110 (Fig. 1 and 2) or 210 (Fig.3) which is itself directly related to the impeller 102 (Fig. 1 and 2) or 202 (Fig.3) of a turbo-machine allows for a reduced stack of tolerances that can lead to a smaller air gap 6A, 6B at impeller level for better performance.

As mentioned above the outside diameter of the impeller or turbine 102 is commonly larger than the rest of diameters on the shaft components, thus providing the advantage that for a given magnetic flow generated by a coil 112, the available surface is more important, directly increasing the load capacity.

Due to the fact that the auxiliary bearing 170, 180 or 290 is included in the corresponding axial bearing 110 or 210, a leak of magnetic flow can find its way through the auxiliary bearing 170, 180 or 290, thus reducing load capacity if saturation occurs. However in order to remedy this possible drawback it is possible to drastically reduce these leaks by placing a non-magnetic insert 295 between the stator armature 211 of the axial bearing 210 and the auxiliary bearing 290 as shown in Figs 3 and 4C.

According to the invention the rotor stiffness is improved since the rotor armature or thrust disc 120, 220 of the axial magnetic bearing 110; 210 is integrated in the impeller or turbine 102; 202 which allows for the reduction of the shaft's overall length and also implies a gain of weight since conventional separate thrust discs, such as the disc 7 in Fig. 5 are usually massive.

Since each auxiliary bearing 170, 180, 290 may be located inside an axial bearing assembly, the overall length of the shaft is reduced and two different functions are combined in one module.

Both length and weight reductions improve the stiffness of the rotor and therefore improve the dynamic behavior of the rotor at high speeds which are required for this kind of turbo-machines.

The impeller or turbine wheel 102; 202 being integral with or directly attached to a rotary armature 120; 220 of an axial magnetic bearing 110; 210 whose stator portion 111, 112 is integral with an auxiliary bearing 170; 180; 290, the positioning of the impeller or turbine wheel 102; 202 is improved since the stack of tolerances between the parts is very much reduced.

Referring to Fig. 3 and Figs 4A to 4C, a turbo-machine is shown which comprises first and second impellers 202, 202' which are located at first and second ends of a rotary shaft 203 within a housing 201. The shaft 203 may be rotated by an electric motor 207 which is located in a central location between first and second radial magnetic bearings 208 associated with respective radial sensors 209 for sensing the radial position of the rotary shaft 203. Two axial magnetic bearings 210, 210' each comprise a stator portion each including a ferromagnetic core 212, 212' respectively and coils 211, 211' respectively and a rotor armature 220, 220' respectively which is integral with the respective impeller 202, 202'.

The rotor armatures 220, 220' are both made of iron or of a material which is adapted to be attracted in a magnetic field and are constituted by a rear face 221, 221' of the impeller 202, 202' respectively which is located nearby. Moreover an auxiliary bearing 290, 290' is integrated within the stator portion 211, 212; 211', 212' respectively of the axial magnetic bearing 210; 210' respectively cooperating with the impeller 202, 202'.

In the embodiment of Fig. 3, the auxiliary bearings 290, 290' comprise double rows of balls 291 maintained between outer and inner races 292, 293 (see Fig. 4C), but these auxiliary bearings could also be designed as single row ball bearings 170 as shown in Fig. 1, as needle roller bearings or else as sliding bearings 180 as shown in Fig. 2.

For the sake of clarity in fig. 3 only examples of sensors 190, 190' for sensing the axial position of the rotary shaft 203 are shown together with the radial sensors 209 whereas the control circuits associated with the radial magnetic bearings 208 and the axial magnetic bearings 210 and 210' to define a 5-axis suspension are not represented in figure 3.

As already mentioned previously the arrangement of Fig.3 defines a compact turbo-machine of reduced length due to the fact that the impellers 202, 202' are used as thrust bearing rotary armatures and the auxiliary bearings 290, 290' are combined with the thrust bearing stator portions 211, 212; 211', 212'. The rotor assembly is thus stiffer than an arrangement where the different components would be arranged next to the others.

Furthermore better performance is obtained due to the fact that the stack of tolerances is reduced and air gaps 206A, 206B between the vanes of an impeller 202 and the corresponding frame 250 (or 250' for the impeller 202') are minimized, as well as the air gap 206C between an auxiliary bearing 290 and the rotary shaft 203 (see Fig. 4A to 4C).

Although preferred embodiments have been shown and described, it should be understood that any changes and modifications may be made therein without departing from the scope of the invention as defined in the appended claims. Thus although an electric motor 207 is described with reference to Fig. 3, another type of electric machine may be used, e.g. an electric generator. Furthermore although single impeller wheels are shown in the drawings, the invention could also be applied to multiple impeller wheels or multiple turbine wheels.

Furthermore although the invention may be applied to a 5-axis magnetic suspension, it may also be applied to a rotary shaft supported by a combination of active magnetic bearings (controlled electromagnets) and passive magnetic bearings (permanent magnets).

## Claims

1. An axial bearing assembly for a turbo-machine for compressing or expanding a fluid, the assembly comprising:
- an active axial magnetic bearing including a first rotor armature (120; 220) and a first stator portion including a ferromagnetic core (111; 211), wherein said active axial magnetic bearing is adapted to be controlled by a control circuit (130) receiving information signals outputted by at least one axial detector (240) configured for sensing the axial position of a rotary shaft (103; 203) supported in a contactless manner by active radial magnetic bearings (208), said first stator portion (111, 112; 211, 212) being located opposite said first rotor armature, said first rotor armature (120; 220) being made of iron or of a material which is adapted to be attracted in a magnetic field,
the assembly further comprising:
- at least one auxiliary bearing (170; 180, 290), and
- a first impeller (102; 202) mountable at a first end of said rotary shaft (203), and
wherein said first rotor armature is constituted by a rear face (121; 221) of said first impeller (102; 202),
the bearing assembly being **characterized in that** said auxiliary bearing (170; 180; 290) is integrated within said ferromagnetic core (111; 211).

2. The axial bearing assembly according to claim 1, wherein said first rotor armature (120; 220) being made of iron or of a material which is adapted to be attracted in a magnetic field is constituted by a separate element which is mounted on said first impeller (102; 202) to constitute said rear face (121; 221) of said first impeller (102; 202), said first impeller (102; 202) being itself made of a material which is not adapted to be attracted in a magnetic field.

3. The axial bearing assembly according to claim 1, wherein said first rotor armature (120; 220) being constituted by said rear face (121; 221) of said first impeller (102; 202) is an integral part of said first impeller (102; 202) which is itself made of iron or of a material which is adapted to be attracted in a magnetic field.

4. The axial bearing assembly according to any one of claims 1 to 3, further comprising a rotary shaft as mentioned in claim 1, wherein said first impeller (102; 202) has a larger diameter than a mean diameter of said rotary shaft (103; 203).

5. The axial bearing assembly according to any one of claims 1 to 4, wherein it further comprises an insert made of a non-magnetic material which is interposed between said first stator portion (111, 112; 211, 212) of said axial magnetic bearing (110; 210) and said auxiliary bearing (170; 180; 290) integrated within said first stator portion (111, 112; 211, 212) of said axial magnetic bearing (110; 210).

6. The axial bearing assembly according to any one of claims 1 to 5, wherein said auxiliary bearing (170; 290) is a ball bearing.

7. The axial bearing assembly according to any one of claims 1 to 5, wherein said auxiliary bearing (180) is a needle roller bearing.

8. The axial bearing assembly according to any one of claims 1 to 5, wherein said auxiliary bearing is a sliding bearing.

9. A turbo-machine for compressing or expanding a fluid, comprising a housing (101; 201), a rotary shaft (103; 203) which is mounted within said housing (101; 201), an electric machine (207) associated with said rotary shaft (103; 203), radial magnetic bearings (208) for radially supporting the rotary shaft (103; 203) in a contactless manner, at least a first axial bearing assembly (110; 210) according to claim 1, at least one axial detector (140; 240) for sensing the axial position of the rotary shaft (103; 203), radial detectors (209) for sensing the radial position of the rotary shaft (103; 203), and a control circuit (130) for controlling said at least first axial bearing assembly (110; 210) and said radial magnetic bearings (208) from information signals outputted by said at least one axial detector (140; 240) and said radial detectors (209).

10. The turbo-machine according to claim 9, wherein said at least first impeller (102; 202) is configured to provide a radial compression or expansion of the fluid.

11. The turbo-machine according to claim 9, wherein said at least first impeller (102; 202) is configured to provide an axial compression or expansion of the fluid.

12. The turbo-machine according to any one of claims 9 to 11, wherein it further comprises a second impeller (202') for compressing or expanding the fluid, said second impeller (202') being mounted at a second end of said rotary shaft (203), a second axial magnetic bearing (210'), wherein a second auxiliary bearing (290') is integrated within a second stator portion (211', 212') of said second axial magnetic bearing (210') and wherein said second stator portion (211', 212') of said second axial magnetic bearing (210') is located opposite a second rotor armature (220') of said second axial magnetic bearing (210'), said second rotor armature (220') being made of iron or of a material which is adapted to be attracted in a magnetic field and being constituted by a rear face (221') of said second impeller (202').

## Patentansprüche

1. Axiallageranordnung für eine Turbomaschine zum Komprimieren oder Ausdehnen eines Fluids, wobei die Anordnung Folgendes umfasst:
- ein aktives axiales Magnetlager, das einen ersten Rotoranker (120; 220) und einen ersten Statorabschnitt, der einen ferromagnetischen Kern (111; 211) enthält, umfasst, wobei das aktive axiale Magnetlager geeignet ist, durch einen Regelkreis (130) geregelt zu werden, der Informationssignale empfängt, die von wenigstens einem axialen Detektor (240) ausgegeben werden, der dazu ausgelegt ist, die axiale Position einer Drehwelle (103; 203) zu erkennen, die auf berührungslose Weise durch aktive radiale Magnetlager (208) gehalten ist, wobei sich der erste Statorabschnitt (111, 112; 211, 212) gegenüber dem ersten Rotoranker befindet, wobei der erste Rotoranker (120; 220) aus Eisen oder aus einem Material hergestellt ist, das geeignet ist, in einem Magnetfeld angezogen zu werden,
wobei die Anordnung ferner Folgendes umfasst:
- wenigstens ein Hilfslager (170; 180; 290) und
- ein erstes Laufrad (102; 202), das an einem ersten Ende der Drehwelle (203) befestigbar ist, und
wobei der erste Rotoranker durch eine hintere Fläche (121; 221) des ersten Laufrads (102; 202) gebildet ist,
wobei die Lageranordnung **dadurch gekennzeichnet ist, dass** das Hilfslager (170; 180; 290) in dem ferromagnetischen Kern (111; 211) integriert ist.

2. Axiallageranordnung nach Anspruch 1, wobei der erste Rotoranker (120; 220), der aus Eisen oder aus einem Material hergestellt ist, das geeignet ist, in einem Magnetfeld angezogen zu werden, durch ein separates Element gebildet ist, das an dem ersten Laufrad (102; 202) befestigt ist, um die hintere Fläche (121; 221) des ersten Laufrads (102; 202) zu bilden, wobei das erste Laufrad (102; 202) selbst aus einem Material hergestellt ist, das nicht geeignet ist, in einem Magnetfeld angezogen zu werden.

3. Axiallageranordnung nach Anspruch 1, wobei der erste Rotoranker (120; 220), der durch die hintere Fläche (121; 221) des ersten Laufrads (102; 202) gebildet ist, ein integraler Bestandteil des ersten Laufrads (102; 202) ist, das selbst aus Eisen oder aus einem Material hergestellt ist, das geeignet ist, in einem Magnetfeld angezogen zu werden.

4. Axiallageranordnung nach einem der Ansprüche 1 bis 3, ferner umfassend eine Drehwelle nach Anspruch 1, wobei das erste Laufrad (102; 202) einen größeren Durchmesser als ein mittlerer Durchmesser der Drehwelle (103; 203) aufweist.

5. Axiallageranordnung nach einem der Ansprüche 1 bis 4, wobei sie ferner einen Einsatz umfasst, der aus einem nichtmagnetischen Material hergestellt ist und zwischen dem ersten Statorabschnitt (111, 112; 211, 212) des axialen Magnetlagers (110; 210) und dem Hilfslager (170; 180; 290) angeordnet ist, das in dem ersten Statorabschnitt (111, 112; 211, 212) des axialen Magnetlagers (110; 210) integriert ist.

6. Axiallageranordnung nach einem der Ansprüche 1 bis 5, wobei das Hilfslager (170; 290) ein Kugellager ist.

7. Axiallageranordnung nach einem der Ansprüche 1 bis 5, wobei das Hilfslager (180) ein Nadellager ist.

8. Axiallageranordnung nach einem der Ansprüche 1 bis 5, wobei das Hilfslager ein Gleitlager ist.

9. Turbomaschine zum Komprimieren oder Ausdehnen eines Fluids, umfassend ein Gehäuse (101; 201), eine Drehwelle (103; 203), die in dem Gehäuse (101; 201) befestigt ist, eine elektrische Maschine (207), die mit der Drehwelle (103; 203) verbunden ist, radiale Magnetlager (208) zum radialen Halten der Drehwelle (103; 203) auf berührungslose Weise, wenigstens eine erste Axiallageranordnung (110; 210) nach Anspruch 1, wenigstens einen axialen Detektor (140; 240) zum Erkennen der axialen Position der Drehwelle (103; 203), radiale Detektoren (209) zum Erkennen der radialen Position der Drehwelle (103; 203) und einen Regelkreis (130) zum Regeln der wenigstens ersten Axiallageranordnung (110; 210) und der radialen Magnetlager (208) aus Informationssignalen, die von dem wenigstens einen axialen Detektor (140; 240) und den radialen Detektoren (209) ausgegeben werden.

10. Turbomaschine nach Anspruch 9, wobei das wenigstens erste Laufrad (102; 202) dazu ausgelegt ist, eine radiale Komprimierung oder Ausdehnung des Fluids bereitzustellen.

11. Turbomaschine nach Anspruch 9, wobei das wenigstens erste Laufrad (102; 202) dazu ausgelegt ist, eine axiale Komprimierung oder Ausdehnung des Fluids bereitzustellen.

12. Turbomaschine nach einem der Ansprüche 9 bis 11, wobei sie ferner ein zweites Laufrad (202') zum Komprimieren oder Ausdehnen des Fluids, wobei das zweite Laufrad (202') an einem zweiten Ende der Drehwelle (203) befestigt ist, und ein zweites axiales Magnetlager (210') umfasst, wobei ein zweites Hilfslager (290') in einem zweiten Statorabschnitt (211', 212') des zweiten axialen Magnetlagers (210') integriert ist und wobei sich der zweite Statorabschnitt (211', 212') des zweiten axialen Magnetlagers (210') gegenüber einem zweiten Rotoranker (220') des zweiten axialen Magnetlagers (210') befindet, wobei der zweite Rotoranker (220') aus Eisen oder aus einem Material hergestellt ist, das geeignet ist, in einem Magnetfeld angezogen zu werden, und durch eine hintere Fläche (221') des zweiten Laufrads (202') gebildet ist.

## Revendications

1. Ensemble à palier axial pour une turbomachine pour la compression ou la dilatation d'un fluide, l'ensemble comprenant :
- un palier magnétique axial actif incluant une première armature rotor (120 ; 220) et une première portion stator incluant un noyau ferromagnétique (111 ; 211), dans lequel ledit palier magnétique axial actif est adapté pour être commandé par un circuit de commande (130) recevant des signaux d'informations produits en sortie par au moins un détecteur axial (240) configuré pour détecter la position axiale d'un arbre rotatif (103 ; 203) supporté sans contact par des paliers magnétiques radiaux actifs (208), ladite première portion stator (111, 112 ; 211, 212) étant située à l'opposé de ladite première armature rotor, ladite première armature rotor (120 ; 220) étant faite de fer ou d'un matériau qui est adapté pour être attiré dans un champ magnétique,
l'ensemble comprenant en outre :
- au moins un palier auxiliaire (170 ; 180, 290), et
- une première roue à aubes (102 ; 202) montable au niveau d'une première extrémité dudit arbre rotatif (203), et
dans lequel ladite première armature rotor est constituée par une face arrière (121 ; 221) de ladite première roue à aubes (102 ; 202),
l'ensemble à palier étant **caractérisé en ce que** ledit palier auxiliaire (170 ; 180 ; 290) est intégré à l'intérieur dudit noyau ferromagnétique (111 ; 211).

2. Ensemble à palier axial selon la revendication 1, dans lequel ladite première armature rotor (120 ; 220) faite de fer ou d'un matériau qui est adapté pour être attiré dans un champ magnétique est constituée par un élément séparé qui est monté sur ladite première roue à aubes (102 ; 202) pour constituer ladite face arrière (121 ; 221) de ladite première roue à aubes (102 ; 202), ladite première roue à aubes (102 ; 202) étant elle-même faite d'un matériau qui n'est pas adapté pour être attiré dans un champ magnétique.

3. Ensemble à palier axial selon la revendication 1, dans lequel ladite première armature rotor (120 ; 220) constituée par ladite face arrière (121 ; 221) de ladite première roue à aubes (102 ; 202) fait partie intégrante de ladite première roue à aubes (102 ; 202) qui est elle-même faite de fer ou d'un matériau qui est adapté pour être attiré dans un champ magnétique.

4. Ensemble à palier axial selon l'une quelconque des revendications 1 à 3, comprenant en outre un arbre rotatif tel que mentionné dans la revendication 1, dans lequel ladite première roue à aubes (102 ; 202) a un diamètre supérieur à un diamètre moyen dudit arbre rotatif (103 ; 203).

5. Ensemble à palier axial selon l'une quelconque des revendications 1 à 4, dans lequel il comprend en outre une pièce rapportée faite d'un matériau non magnétique qui est interposée entre ladite première portion stator (111, 112 ; 211, 212) dudit palier magnétique axial (110 ; 210) et ledit palier auxiliaire (170 ; 180 ; 290) intégré à l'intérieur de ladite première portion stator (111, 112 ; 211, 212) dudit palier magnétique axial (110 ; 210).

6. Ensemble à palier axial selon l'une quelconque des revendications 1 à 5, dans lequel ledit palier auxiliaire (170 ; 290) est un palier à billes.

7. Ensemble à palier axial selon l'une quelconque des revendications 1 à 5, dans lequel ledit palier auxiliaire (180) est un palier à rouleaux à aiguilles.

8. Ensemble à palier axial selon l'une quelconque des revendications 1 à 5, dans lequel ledit palier auxiliaire est un palier coulissant.

9. Turbomachine pour la compression ou la dilatation d'un fluide, comprenant un logement (101 ; 201), un arbre rotatif (103 ; 203) qui est monté à l'intérieur dudit logement (101 ; 201), une machine électrique (207) associée audit arbre rotatif (103 ; 203), des paliers magnétiques radiaux (208) pour supporter radialement l'arbre rotatif (103 ; 203) sans contact, au moins un premier ensemble à palier axial (110 ; 210) selon la revendication 1, au moins un détecteur axial (140 ; 240) pour détecter la position axiale de l'arbre rotatif (103 ; 203), des détecteurs radiaux (209) pour détecter la position radiale de l'arbre rotatif (103 ; 203), et un circuit de commande (130) pour commander ledit au moins premier ensemble à palier axial (110 ; 210) et lesdits paliers magnétiques radiaux (208) à partir de signaux d'informations produits en sortie par ledit au moins un détecteur axial (140 ; 240) et lesdits détecteurs radiaux (209).

10. Turbomachine selon la revendication 9, dans laquelle ladite au moins première roue à aubes (102 ; 202) est configurée pour fournir une compression ou dilation radiale du fluide.

11. Turbomachine selon la revendication 9, dans laquelle ladite au moins première roue à aubes (102 ; 202) est configurée pour fournir une compression ou dilation axiale du fluide.

12. Turbomachine selon l'une quelconque des revendications 9 à 11, dans laquelle elle comprend en outre une seconde roue à aubes (202') pour la compression ou la dilatation du fluide, ladite seconde roue à aubes (202') étant montée au niveau d'une seconde extrémité dudit arbre rotatif (203), un second palier magnétique axial (210'), dans laquelle un second palier auxiliaire (290') est intégré à l'intérieur d'une seconde portion stator (211', 212') dudit second palier magnétique axial (210') et dans laquelle ladite seconde portion stator (211', 212') dudit second palier magnétique axial (210') est située à l'opposé d'une seconde armature rotor (220') dudit second palier magnétique axial (210'), ladite seconde armature rotor (220') étant faite de fer ou d'un matériau qui est adapté pour être attiré dans un champ magnétique et étant constituée par une face arrière (221') de ladite seconde roue à aubes (202').
